# FASCICULE DE BREVET EUROPEEN

(11) **EP 2 163 066 B1**
(45) Date de publication et mention de la délivrance du brevet: **09.01.2019**
(21) Numéro de dépôt: 08806059.5
(22) Date de dépôt: 23.06.2008
(51) Int. Cl.: H04L 29/08, H04L 29/06, H04W 4/02, H04W 8/14, H04W 8/18

(54) **PROCEDE ET SYSTEME DE DETERMINATION D'UN LIEU GEOGRAPHIQUE DE RENCONTRE ENTRE DES PERSONNES AU TRAVERS D'UN ENVIRONNEMENT DE TELECOMMUNICATIONS**
VERFAHREN UND SYSTEM ZUR BESTIMMUNG EINES GEOGRAPHISCHEN STANDORTS FÜR EIN TREFFEN ZWISCHEN PERSONEN ÜBER EINE TELEKOMMUNIKATIONSUMGEBUNG
METHOD AND SYSTEM FOR DETERMINING A GEOGRAPHICAL LOCATION FOR MEETING BETWEEN PEOPLE VIA A TELECOMMUNICATION ENVIRONMENT

(30) Priorité: 26.06.2007 FR 0756039
(43) Date de publication de la demande: 17.03.2010
(73) Titulaire: Orange, 75015 Paris (FR)
(72) Inventeur: PARE, Louis, F-22300 Lannion (FR); HORVILLE, Philippe, F-92000 Nanterre (FR)
(86) Numéro de dépôt international: PCT/FR2008/051127
(87) Numéro de publication internationale: WO 2009/007581

(56) Documents cités:
- WO-A-90/13828
- WO-A-2004/064349
- WO-A2-03/058518
- US-A1- 2007 073 711

## Description

La présente invention concerne le domaine de la mise en relation entre des personnes physiques, au moyen d'un environnement de télécommunications partagé et, plus précisément au moyen d'un environnement virtuel à l'intérieur duquel des personnes physiques sont représentées chacune par un avatar qu'elles peuvent contrôler, respectivement, au moyen d'un dispositif d'immersion relié à un réseau de communication.

En effet, dans un monde virtuel, il devient possible à des personnes physiques de communiquer entre elles par l'intermédiaire de leurs avatars respectifs, sans qu'elles aient nécessairement à dévoiler leur apparence réelle à leurs interlocuteurs respectifs.

De tels avatars en deux (2D) ou en trois (3D) dimensions peuvent notamment être personnalisés en termes de représentation graphique (allure, apparence, visage, vêtements, etc.) pour être, par exemple, le plus représentatifs des personnes physiques qu'ils représentent à l'intérieur d'un environnement virtuel, plus communément appelé monde virtuel. Un tel monde virtuel permettant des rencontres virtuelles est connu de la demande de brevet internationale WO03/058518 A1.

L'expérience montre que dans le cadre des communications et des relations initiées entre personnes physiques par l'intermédiaire de leurs avatars respectifs, une étape suivante pour lesdites personnes, consiste à vouloir se donner rendez-vous dans le monde réel, dans l'objectif de se rencontrer physiquement, ce qui a pour inconvénient d'impliquer pour celles-ci la détermination d'un lieu géographique et d'une date de rencontre qui soient compatibles avec les contraintes de chacune d'elles.

Un tel inconvénient se trouve d'autant plus accentué que les personnes mises en relation par l'intermédiaire de leurs avatars respectifs dans un environnement virtuel partagé sont le plus souvent géographiquement éloignées l'une de l'autres, alors que leur leurs échanges au travers ledit environnement virtuel, au moyen d'un terminal de communication relié à un réseau de communication, avait préalablement favorisé leur rapprochement et leur mise en relation.

De plus, ces personnes se trouvent généralement peu compétentes pour déterminer conjointement un lieu de rencontre qui puisse leur convenir à toutes sur le plan géographique, ce qui peut finalement les conduire, malgré leur désir de se rencontrer physiquement, à retarder, voir à annuler une telle rencontre dans la vie réelle. Une telle application proposant des lieux rencontre physique sur un site web est connue de la demande de brevet américaine US2007/073711 A1.

La présente invention offre une solution qui ne présente pas les inconvénients mentionnés ci-avant, en proposant un procédé permettant de favoriser la rencontre dans la vie réelle entre des personnes mises en relation, de façon initiale, par l'intermédiaire de leurs avatars respectifs évoluant dans un environnement de télécommunications, par exemple un environnement virtuel partagé, accessible au moyen d'un terminal de communication formant dispositif d'immersion.

A cet effet, l'invention concerne un procédé selon la revendication 1.

Ainsi, de par le procédé selon l'invention, il devient possible de proposer un lieu de rencontre appartenant au monde réel aux personnes désireuses de se rencontrer physiquement suite à leur mise en relation à l'intérieur d'un environnement partagé de télécommunications, d'une part d'une façon automatique et, d'autre part, d'une façon optimisée en termes de limitation de distance et de temps de trajets pour ces dernières.

Cette proposition d'au moins un lieu de rencontre est en outre réalisée automatiquement, dès lors qu'une distance géographique entre les deux avatars descend en dessous d'un seuil de valeur prédéterminée à l'intérieur dudit environnement virtuel.

Par extension, l'invention permet de proposer un lieu de rencontre virtuel, à l'intérieur même dudit environnement virtuel.

Un avantage supplémentaire du présent procédé selon l'invention, réside dans sa capacité à inciter des personnes habituées à communiquer au travers un environnement de télécommunications, par exemple un environnement virtuel et par l'intermédiaire de leurs avatars respectifs en 2D ou 3D, à prendre rendez-vous pour se rencontrer physiquement dans la vie réelle, sans avoir à déterminer elle-même l'éventuel lieu de rencontre, le procédé se chargeant de cette détermination d'une manière parfaitement transparente et optimale pour lesdites personnes.

La présente invention contribue donc à rapprocher physiquement dans le monde réel, des personnes habituées à être mise en relation et à communiquer par l'intermédiaire d'un environnement partagé de télécommunications. Elle tend également à favoriser un côté plus naturel et objectif dans les relations initiées entre personnes physiques au travers un tel environnement.

Dans un mode de réalisation préféré de l'invention, ledit environnement étant un environnement virtuel dans lequel lesdites première et deuxième personnes sont représentées respectivement par un premier et un deuxième avatar, ladite étape de détermination dudit lieu de rencontre est exécutée lorsqu'une valeur d'un indicateur de distance entre lesdits premier et deuxième avatars dans ledit environnement virtuel est inférieure à un seuil prédéterminé.

Une telle approche permet d'automatiser ladite étape de détermination, en fonction du positionnement d'avatars les uns par rapport aux autres, voir en fonction de leurs attitudes respectives susceptibles d'être représentatives d'un souhait desdites personnes physiques de se rencontrer dans la vie réelle.

Préférentiellement, ladite étape de détermination tient compte d'au moins une information statique de localisation desdites première et deuxième personnes, respectivement.

En effet, les personnes mises en relation par l'intermédiaire d'un environnement virtuel possèdent un compte d'utilisateur dans lequel elles ont préalablement renseigné certaines informations personnelles, parmi lesquelles au moins une information statique de localisation, comme leur adresse postale personnelle.

Une telle information statique de localisation de la personne sera avantageusement utilisée par le procédé selon l'invention pour évaluer, par exemple, la distance géographique séparant cette première personne de la deuxième personne avec laquelle elle est mise en relation, et ainsi déterminer un ou plusieurs lieux de rencontre géographiquement adapté pour lesdites première et deuxième personnes.

De façon avantageuse, ladite au moins une information statique de localisation utilisée par le procédé selon l'invention appartiendra, de façon non limitative au groupe comprenant :
▪ une adresse postale de domicile;
▪ une adresse postale de lieu de travail;
▪ une adresse postale de lieu de vacances.

Le procédé selon l'invention pourra bien entendu prendre en compte tout type d'information statique de localisation.

De façon également préférentielle, ladite étape de détermination tient compte d'au moins une information dynamique de localisation desdites première et/ou deuxième personnes, respectivement.

Il se peut en effet qu'une première personne connectée audit environnement virtuel partagé soit en déplacement et donc, que la simple prise en compte d'une information statique de localisation ne soit plus suffisante pour déterminer un lieu de rencontre qui soit géographiquement adapté.

La prise en compte par le procédé selon l'invention d'une information dynamique de localisation des personnes en relation, par exemple un ensemble de coordonnées GPS (pour "global positionning system" en anglais ou "système de positionnement satellite" en français) sera donc parfaitement représentative du lieu géographique réel où se situe la personne associée à cette information. Sa prise en compte par le procédé selon l'invention permettra de déterminer un lieu géographique de rencontre entre les personnes mise en relation dans l'environnement virtuel, qui soit toujours parfaitement adapté, même lorsque l'une des personnes impliquée dans une relation avec une autre personne dans un environnement virtuel, n'est pas à son domicile et/ou est en déplacement.

De façon avantageuse, ladite au moins une information dynamique de localisation est du type appartenant au groupe comprenant :
▪ un ensemble de coordonnées de géolocalisation obtenues auprès d'un dispositif de géolocalisation ;
▪ un ensemble de coordonnées de géolocalisation issu d'une adresse d'une cellule de rattachement d'un terminal de communication mobile.

Dans un mode de réalisation particulier de l'invention, ladite étape de détermination tient compte d'au moins un critère de préférence préalablement renseigné par ladite première et/ou deuxième personne dans un premier et un deuxième fichiers de paramétrage respectivement associés auxdites première et deuxième personnes dans ledit environnement virtuel, ledit critère de préférence appartenant au groupe comprenant :
▪ un seuil de proximité géographique entre ledit lieu de rencontre et lesdites coordonnées statiques ou dynamiques de localisation desdites première ou deuxièmes personnes physiques ;
▪ une durée maximum de temps de trajet entre un lieu de localisation desdites première ou deuxième personnes physique et ledit lieu de rencontre, pour au moins un type de moyen de transport prédéterminé.

Une telle approche s'avère parfaitement intéressante en ce sens que chaque personne peut renseigner, au travers son profil d'utilisateur associé au service de consultation et/ou de mise en relation entre personnes accessible au travers ledit environnement virtuel, un ensemble de critères de préférences dont la prise en compte par le procédé selon l'invention conduira à un affinage dans la détermination du lieu de rencontre adapté. Par exemple, une personne pourra indiqué au travers un ou plusieurs de ses critères de préférence qu'il lui est indifférent de se déplacer de plus de dix kilomètre pour se rendre sur le lieu de rencontre déterminé proposé par le procédé, ou bien au contraire, elle pourra renseigner qu'elle ne souhaite pas se déplacer à plus de un kilomètre de son lieu de localisation (localisation instantanée, ou adresse statique).

Le procédé pourra prendre en compte de façon non limitative une combinaisons d'une pluralité de critères de préférence préalablement renseignés par une ou plusieurs der personnes en relation, par exemple que ladite première personne préfère un lieu de rencontre qui soit situé à moins de dix kilomètres de son domicile et qui soit un lieu privé.

Le procédé pourra également détecter et alerter les personnes d'une incompatibilité éventuelle de leurs critères de préférence respectifs.

Avantageusement, ladite étape de détermination dudit lieu de rencontre comprend une sous-étape d'interrogation d'une base de données de lieux géographiques pour déterminer au moins un lieu de rencontre qui soit adapté pour une rencontre entre lesdites première et deuxième personnes physiques, ladite sous-étape d'interrogation tenant compte d'au moins une des informations suivante :
▪ ladite information statique de localisation de ladite première personne physique;
▪ ladite information dynamique de localisation de ladite première personne;
▪ ledit au moins un critère (i4) de préférence renseigné par ladite première personne;
▪ ladite information (i2) statique de localisation de ladite deuxième personne physique;
▪ ladite information (i3) dynamique de localisation de ladite deuxième personne;
▪ ledit au moins un critère (i4) de préférence renseigné par ladite deuxième personne.

Un tel choix technique a pour avantage de permettre une optimisation de la recherche du lieu de rencontre par le procédé selon l'invention, en s'appuyant sur une base de données de lieux géographique pouvant potentiellement servir de lieux de rencontre qui soient chacun adaptés, au sens de l'invention.

Il est bien entendu possible d'envisager que le procédé selon l'invention puisse collaborer avec une base de données d'un système d'information géographique et/ou avec toute base de données de lieux géographiques adaptés pour une rencontre entre des personnes physiques, lesquels lieux auront pu faire l'objet d'une sélection préférentielle dans le cadre d'un partenariat avec une entité particulière, un restaurant, un café, par exemple et de façon non limitative.

Dans un mode de réalisation particulier de l'invention, ledit procédé comprend une étape d'acceptation conjointe par lesdites première et deuxième personnes physiques, au moyen desdits premier et deuxième avatars, dudit lieu de rencontre proposé à ladite étape de proposition.

Ceci permet auxdites personnes de se mettre d'accord au travers ledit environnement virtuel, sur le lieu de rencontre proposé, et permet ainsi au fournisseur du service de rencontre de réaliser une pluralité d'études statistiques concernant l'issue d'une rencontre entre personnes initiées par avatars interposés au travers un environnement virtuel, études statistiques pouvant également intéressés d'éventuels partenaires de ce fournisseur dont l'établissement adapté pour une rencontre pourrait figurer dans la sélection préférentielle précitée.

Avantageusement, ladite étape d'acceptation est suivie d'une étape d'établissement automatique d'une communication entre lesdites première et deuxième personnes physiques pour leur permettre de définir une date et un horaire de rencontre sur ledit lieu de rencontre.

Ceci offre pour avantage de permettre un premier contact dans la vie réelle entre les personnes ayant déterminée conjointement leur lieu de rencontre, pour préciser en outre la date et l'horaire de leur rendez-vous sur le lieu de rencontre.

L'invention concerne aussi un système selon la revendication 10.

Un tel système possède une portée sensiblement équivalente, du point de vue structurel, à celle définie pour le procédé selon l'invention.

D'une façon préférentielle, ledit environnement étant un environnement virtuel dans lequel lesdites première et deuxième personnes sont représentées respectivement par un premier et un deuxième avatar, lesdits moyens de détermination dudit lieu géographique sont activés lorsqu'un indicateur de proximité entre lesdits premier et deuxième avatars dans ledit environnement virtuel descend au-dessous d'un seuil de proximité prédéterminé.

Dans un mode de réalisation avantageuse de l'invention, lesdits moyens de détermination tiennent compte d'au moins une information statique de localisation desdites première et/ou deuxième personnes, respectivement.

Préférentiellement, lesdits moyens de détermination tiennent compte d'au moins une information dynamique de localisation desdites première et/ou deuxième personne, respectivement.

D'une façon avantageuse, lesdits moyens de détermination tiennent compte d'au moins un critère de préférence préalablement renseigné par ladite première et/ou deuxième personne dans un premier et un deuxième fichiers de paramétrage respectivement associés auxdites première et deuxième personnes dans ledit environnement, ledit critère de préférence appartenant au groupe comprenant :
▪ un seuil de proximité géographique entre ledit lieu de rencontre et lesdites coordonnées statiques ou dynamique de localisation desdites première ou deuxièmes personnes physiques ;
▪ une durée maximum de temps de trajet entre un lieu de localisation desdites première ou deuxième personnes physique et ledit lieu de rencontre, pour au moins un moyen de transport prédéterminé.

Dans un mode de réalisation préférée de l'invention, lesdits moyens de détermination collaborent avec au moins une base de données de lieux géographiques prédéterminés pour déterminer au moins un lieu de rencontre adapté pour une rencontre entre lesdites première et deuxième personnes physiques.

L'invention concerne également un produit programme d'ordinateur selon la revendication 16.

L'invention concerne encore un serveur selon la revendication 17.

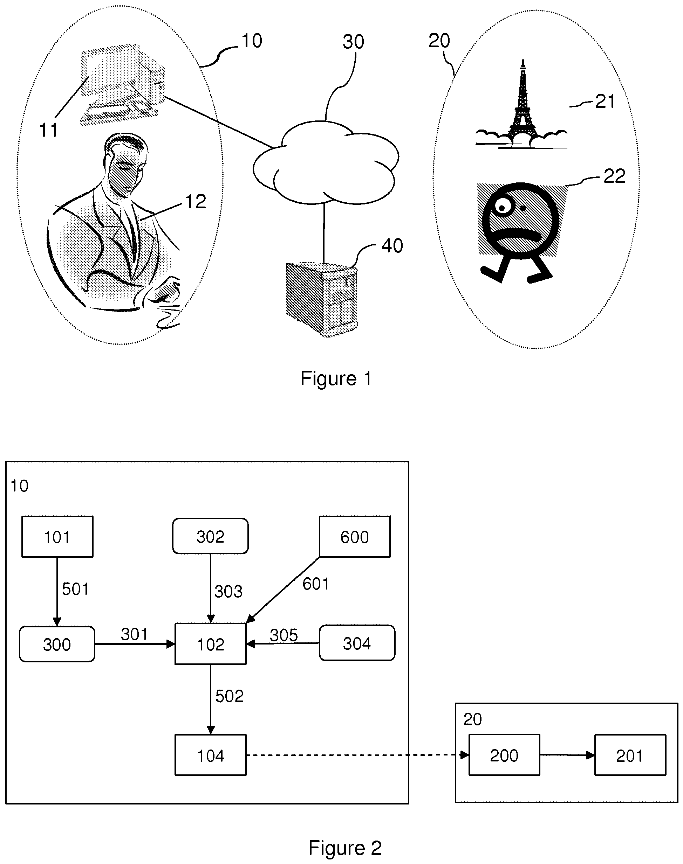

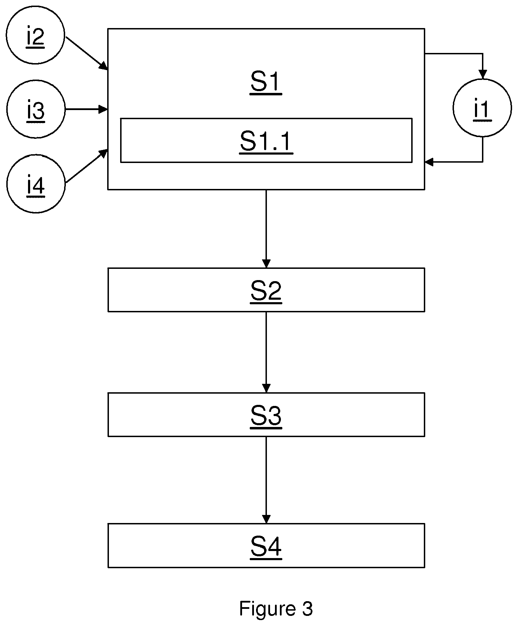

Les caractéristiques et avantages techniques de la présente invention ressortiront mieux de la description suivante, faite à titre indicatif et non limitatif, au regard des dessins annexés sur lesquels:
▪ la figure 1 présente une vue schématique d'un système selon l'invention ;
▪ la figure 2 est un ordinogramme d'un mode de mise en oeuvre du procédé de détermination d'au moins un lieu de rencontre selon l'invention;
▪ la figure 3 est un ordinogramme présentant les différentes étapes du procédé de proposition d'au moins un lieu de rencontre, selon l'invention.

La présente invention propose une solution qui permet à des personnes physiques désireuses de se rencontrer dans le monde réel, après avoir été mises en relation par l'intermédiaire de leurs avatars respectifs dans un monde virtuel, de proposer un lieu de rendez-vous ou de rencontre qui leur soit géographiquement le mieux adapté dans le monde réel, en tenant compte d'éventuels autres critères de préférences.

La solution proposée consiste à déterminer la proximité physique des intervenants dans le monde réel. Le procédé s'appuie sur des paramètres de localisation dans le monde réel et affiche la proximité dans le monde virtuel.

L'utilisateur sait ainsi s'il peut ou non procéder rapidement à la rencontre physique dans le monde réel.

Optionnellement, le procédé peut proposer aux intervenants un lieu de rencontre situé à proximité et répondant à des caractéristiques particulières (par exemple, calme et chauffé comme un café ou un salon de thé, convivial et dynamique comme une discothèque).

L'utilisateur n'a donc plus à trouver des lieux et des dates compatibles avec son emploi du temps, le procédé et systèmes selon l'invention rendant ces taches transparentes pour les utilisateurs.

La rencontre physique dans le monde réel succède donc rapidement à l'envie de rencontrer, diminuant ainsi la frustration de l'attente. Les autres intervenants de la rencontre perdent moins de temps en cas de renoncement.

Comme illustré sur la figure 1, un monde réel 10 peut être composé d'utilisateurs 12, le plus souvent géographiquement distants et équipés chacun d'un système 11 d'immersion dans un monde virtuel 20 composé d'avatars 22, à l'intérieur duquel chaque avatar 22 du monde virtuel 10 représente un des utilisateurs 12 du monde réel.

Dans le cadre de la présente invention, un dispositif 11 d'immersion pourra prendre la forme d'un terminal d'ordinateur, ou de tout autre terminal de communication, relié à un serveur 40 hébergeant le monde virtuel immersif par l'intermédiaire d'un réseau 30 de communication.

Ce serveur 40 a également pour fonction de superviser, coordonner, contrôler, diffuser, voire mémoriser, les évènements déclenchés à l'intérieur du monde virtuel immersif par les différents avatars évoluant dans ce dernier, et de contrôler les mouvements et les interactions entre les avatars 22 entre eux, par exemple en vue de détecter un rapprochement géographique entre deux avatars, à l'intérieur du monde virtuel.

Ainsi, à l'intérieur d'un monde virtuel 20, un utilisateur 12 du monde réel 10 est représenté par un avatar 22.

Un utilisateur 12 peut donc "piloter" en temps réel le comportement de son avatar pour le faire se déplacer, se mouvoir, pour le faire interagir avec certains autres avatars du monde virtuel immersif, par l'intermédiaire de son terminal 11. En arrière-plan, un dispositif de capture vidéo relié audit terminal permet de retranscrire simultanément les mimiques et la gestuelle de l'utilisateur filmé, sur son avatar évoluant à l'intérieur du monde virtuel.

L'invention peut s'appliquer à tout monde virtuel (2D ou 3D) et plus généralement à tout environnement de télécommunications pouvant être partagés par différentes personnes connectées à ce dernier pour être mise en relation par l'intermédiaire d'avatars, préliminairement à leur rencontre dans le monde réel.

Dans un mode de réalisation préférée de l'invention, le procédé et système de proposition de rencontre sont mis en oeuvre en utilisant d'une part le positionnement géographique cellulaire du téléphone mobile d'un utilisateur (dès lors que ce dernier a pris le temps de configurer son profil d'utilisateur pour qu'il en soit ainsi) et/ou d'autre part, les données statiques de localisation associées à cet utilisateur, à savoir, par exemple, une adresse postale, de domicile, professionnelle, etc.

Comme illustré sur l'organigramme de la figure 2, dans le monde réel 10, un dispositif 101 de localisation géographique d'un utilisateur transmet les coordonnées 501 dynamiques de l'utilisateur à intervalles réguliers.

Un conteneur 300, par exemple un fichier ou une base de données, mémorise les coordonnées 301 géographiques dans le monde réel de chaque utilisateur.

Ces coordonnées comportent au moins une adresse statique comme l'adresse postale du domicile ou du lieu de travail et éventuellement une coordonnée dynamique issue de l'adresse de la cellule de rattachement du téléphone mobile, lorsqu'un utilisateur a souscrit à cette option auprès de son opérateur de téléphonie mobile.

Un conteneur 302, par exemple un fichier ou une base de données, contient un seuil 303 de proximité géographique dans le monde réel, seuil paramétrable pour chaque utilisateur, par exemple cinq cents mètres en ville pour un parcours piéton et dix kilomètres hors de la ville pour un parcours en voiture.

Un conteneur 304, par exemple un fichier ou une base de données, contient les informations 305 et notamment les coordonnées géographiques de lieux de rencontre possible dans le monde réel, par exemple les parcs et jardins publics ou les cafés et restaurants.

Le procédé 102 de proposition d'au moins un lieu de rencontre selon l'invention analyse les coordonnées 501 et détermine la proximité géographique par calcul avec les coordonnées géographiques 301 issues du conteneur 300.

Lorsque la proximité descend en dessous d'un seuil de proximité géographique préalablement paramétré par l'utilisateur 303, un signal 502 est envoyé au procédé 104.

Lorsque l'utilisateur active une interface 600, la prise en compte du seuil de proximité dans le procédé 102 est inhibée par une commande 601 forçant l'envoi du signal 502, éventuellement même si la condition de proximité n'est pas remplie.

Le signal 502 comporte la référence de l'avatar concerné et les caractéristiques 305 des lieux de rencontre possibles à proximité.

Les signaux envoyés à l'interface réel/virtuel 104 et 200 provoquent l'affichage graphique 201 associé à la proximité géographique dans le monde virtuel et aux lieux de rencontre possibles dans le monde réel.

La figure 3 résume les grandes étapes revendiquées permettant la mise en oeuvre du procédé selon l'invention de proposition d'au moins un lieu de rencontre à une premier et au moins un deuxième utilisateur connectés à un environnement virtuel dans lequel ils sont respectivement représentés par un premier et un deuxième avatar.

Selon l'invention, un tel procédé met en oeuvre :
▪ une étape S1 de détermination dynamique d'au moins un lieu géographique adapté pour une rencontre entre lesdites première et deuxième personnes physiques, dit lieu de rencontre ;
▪ une étape S2 de présentation dudit lieu de rencontre auxdits premier et deuxième avatar à l'intérieur dudit environnement (20) virtuel.

Ladite étape S1 est exécutée lorsqu'un indicateur (i1) de proximité entre lesdits premier et deuxième avatars dans ledit environnement virtuel descend au-dessous d'un seuil prédéterminé de proximité.

Elle tient compte pour chacune des première et deuxième personnes concernées par la proposition d'au moins un lieu de rencontre, d'au moins une information i2 statique de localisation et/ou d'au moins une information i3 dynamique de localisation et/ou d'au moins un critère i4 de préférence.

L'étape S1 de détermination du lieu de rencontre comprend une sous-étape S1.1 d'interrogation d'une base de données de lieux géographiques pour déterminer au moins un lieu de rencontre qui soit adapté pour une rencontre entre lesdites première et deuxième personnes physiques.

Dans un mode de réalisation particulier de l'invention, le procédé comprend une étape S3 d'acceptation conjointe par lesdites première et deuxième personnes physiques, au moyen des premier et deuxième avatars, du lieu de rencontre proposé à ladite étape S2 de proposition.

Dans un mode de réalisation particulier, l'étape S3 d'acceptation est suivi d'une étape S4 d'établissement automatique d'une communication entre lesdites première et deuxième personnes physiques pour leur permettre de définir une date et un horaire de rencontre sur ledit lieu de rencontre.

## Revendications

1. Procédé de transmission de données à une première et au moins une deuxième personne (12) physique dans un environnement (20) auquel lesdites première et deuxième personnes sont connectées au moyen d'un premier et d'un deuxième terminal de communication, respectivement,
ledit environnement (20) étant un environnement virtuel dans lequel lesdites première et deuxième personnes sont représentées respectivement par un premier et un deuxième avatar (22), lesdits avatar pouvant être respectivement déplacés dans l'environnement virtuel par les personnes physiques qu'ils représentent, ledit procédé comprend une étape (S1) de détermination dynamique d'au moins un lieu de rencontre géographiquement adapté pour une rencontre entre lesdites première et deuxième personnes physiques, exécutée lorsqu'une valeur d'un indicateur (i1) de distance entre lesdits premier et deuxième avatars dans ledit environnement virtuel est inférieure à un seuil prédéterminé.

2. Procédé selon la revendication 1, comprenant en outre une étape (S2) de représentation dudit lieu de rencontre auxdites première et deuxième personnes dans ledit environnement virtuel (20).

3. Procédé selon la revendication 1, ladite étape (S1) de détermination tenant compte d'au moins une information (i2) statique de localisation desdites première et deuxième personnes, respectivement.

4. Procédé selon la revendication 1, ladite étape (S1) de détermination tenant compte d'au moins une information (i3) dynamique de localisation desdites première et/ou deuxième personnes, respectivement.

5. Procédé selon la revendication 4, ladite au moins une information (i3) dynamique de localisation étant du type appartenant au groupe comprenant :
▪ un ensemble de coordonnées de géolocalisation obtenues auprès d'un dispositif de géolocalisation ;
▪ un ensemble de coordonnées de géolocalisation issu d'une adresse d'une cellule de rattachement d'un terminal de communication mobile.

6. Procédé selon l'une quelconque des revendications 4 et 5, ladite étape (S1) de détermination tenant compte d'au moins un critère (i4) de préférence préalablement renseigné par ladite première et/ou deuxième personne dans un premier et un deuxième fichiers de paramétrage respectivement associés auxdites première et deuxième personnes dans ledit environnement virtuel, ledit critère de préférence appartenant au groupe comprenant :
▪ un seuil (303) de proximité géographique entre ledit lieu de rencontre et lesdites coordonnées statiques ou dynamiques de localisation desdites première ou deuxièmes personnes physiques ;
▪ une durée maximum de temps de trajet entre un lieu de localisation desdites première ou deuxième personnes physique et ledit lieu de rencontre, pour au moins un type de moyen de transport prédéterminé.

7. Procédé selon la revendication 6, ladite étape (S1) de détermination dudit lieu de rencontre comprenant une sous-étape (S1.1) d'interrogation d'une base de données de lieux géographiques pour déterminer au moins un lieu de rencontre qui soit adapté pour une rencontre entre lesdites première et deuxième personnes physiques, ladite sous-étape d'interrogation tenant compte d'au moins une des informations suivante :
▪ ladite information (i2) statique de localisation de ladite première personne physique;
▪ ladite information (i3) dynamique de localisation de ladite première personne;
▪ ledit au moins un critère (i4) de préférence renseigné par ladite première personne;
▪ ladite information (i2) statique de localisation de ladite deuxième personne physique;
▪ ladite information (i3) dynamique de localisation de ladite deuxième personne;
▪ ledit au moins un critère (i4) de préférence renseigné par ladite deuxième personne.

8. Procédé selon l'une quelconque des revendications 1 à 7, comprenant une étape (S3) d'acceptation conjointe par lesdites première et deuxième personnes physiques, au moyen desdits premier et deuxième avatars, dudit lieu de rencontre proposé à ladite étape (S2) de représentation.

9. Procédé selon la revendication 8, ladite étape (S3) d'acceptation étant suivie d'une étape (S4) d'établissement automatique d'une communication entre lesdites première et deuxième personnes physiques pour leur permettre de définir une date et un horaire de rencontre sur ledit lieu de rencontre.

10. Système de transmission de données à une première et au moins une deuxième personne (12) physique dans un environnement (20) auquel lesdites première et deuxième personnes sont connectées au moyen d'un premier et d'un deuxième terminal de communication, respectivement,
l'environnement étant un environnement virtuel dans lequel lesdites première et deuxième personnes sont représentées respectivement par un premier et un deuxième avatar (22), lesdits avatar pouvant être respectivement déplacés dans l'environnement virtuel par les personnes physiques qu'ils représentent, le système comprenant des moyens de détermination dynamique d'au moins un lieu de rencontre géographiquement adapté pour une rencontre entre lesdites première et deuxième personnes physiques, lesdits moyens étant mis en oeuvre lorsqu'une valeur d'un indicateur (i1) de distance entre lesdits premier et deuxième avatars dans ledit environnement virtuel est inférieure à un seuil prédéterminé.

11. Système selon la revendication 10, comprenant en outre des moyens de représentation dudit lieu de rencontre auxdites première et deuxième personnes dans ledit environnement (20).

12. Système selon l'une quelconque des revendications 10 et 11, lesdits moyens de détermination tenant compte d'au moins une information (i2) statique de localisation desdites première et/ou deuxième personnes, respectivement.

13. Système selon l'une quelconque des revendications 10 à 12, lesdits moyens de détermination tenant compte d'au moins une information (i3) dynamique de localisation desdites première et/ou deuxième personne, respectivement.

14. Système selon la revendication 13, lesdits moyens de détermination tenant compte d'au moins un critère (i4) de préférence préalablement renseigné par ladite première et/ou deuxième personne dans un premier et un deuxième fichiers de paramétrage respectivement associés auxdites première et deuxième personnes dans ledit environnement, ledit critère de préférence appartenant au groupe comprenant :
▪ un seuil (303) de proximité géographique entre ledit lieu de rencontre et lesdites coordonnées statiques ou dynamique de localisation desdites première ou deuxièmes personnes physiques ;
▪ une durée maximum de temps de trajet entre un lieu de localisation desdites première ou deuxième personnes physique et ledit lieu de rencontre, pour au moins un moyen de transport prédéterminé.

15. Système selon la revendication 14, lesdits moyens de détermination collaborant avec au moins une base de données de lieux géographiques prédéterminés pour déterminer au moins un lieu de rencontre géographiquement adapté pour une rencontre entre lesdites première et deuxième personnes physiques.

16. Produit programme d'ordinateur téléchargeable depuis un réseau de communication et/ou stocké sur un support d'information lisible par ordinateur et/ou exécutable par un microprocesseur, comprenant des instructions de code pour l'exécution d'un procédé de détermination d'au moins un lieu géographique adapté pour une rencontre entre une première et au moins une deuxième personnes physique, conforme à l'une quelconque des revendications 1 à 9, lorsqu'il est exécuté sur un ordinateur.

17. Serveur (40) de mise à disposition et de gestion d'un environnement virtuel accessible à distance au moyen d'un réseau de communication depuis un dispositif d'immersion d'un utilisateur, ledit utilisateur étant représenté dans ledit environnement virtuel par un avatar, comprenant des moyens pour exécuter un programme d'ordinateur conforme à la revendication 16.

## Patentansprüche

1. Verfahren zur Übertragung von Daten an eine erste und mindestens eine zweite natürliche Person (12) in einer Umgebung (20), mit der die erste und zweite Person mittels eines ersten bzw. eines zweiten Kommunikationsendgeräts verbunden sind, wobei die Umgebung (20) eine virtuelle Umgebung ist, in der die erste und zweite Person durch einen ersten bzw. zweiten Avatar (22) dargestellt werden, wobei die Avatare in der virtuellen Umgebung von den natürlichen Personen, die sie darstellen, verschoben werden können, wobei das Verfahren einen Schritt (S1) der dynamischen Bestimmung mindestens eines Begegnungsorts enthält, der geographisch für eine Begegnung zwischen der ersten und der zweiten natürlichen Person geeignet ist, der ausgeführt wird, wenn ein Wert eines Abstandsanzeigers (i1) zwischen dem ersten und dem zweiten Avatar in der virtuellen Umgebung niedriger als eine vorbestimmte Schwelle ist.

2. Verfahren nach Anspruch 1, das außerdem einen Schritt (S2) der Darstellung des Begegnungsorts der ersten und der zweiten Person in der virtuellen Umgebung (20) enthält.

3. Verfahren nach Anspruch 1, wobei der Bestimmungsschritt (S1) mindestens eine statische Lokalisierungsinformation (i2) der ersten bzw. zweiten Person berücksichtigt.

4. Verfahren nach Anspruch 1, wobei der Bestimmungsschritt (S1) mindestens eine dynamische Lokalisierungsinformation (i3) der ersten und/oder zweiten Person berücksichtigt.

5. Verfahren nach Anspruch 4, wobei die mindestens eine dynamische Lokalisierungsinformation (i3) von der Art ist, die zu der Gruppe gehört, die enthält:
• eine Einheit von Geolokalisierungskoordinaten, die bei einer Geolokalisierungsvorrichtung erhalten werden;
• eine Einheit von Geolokalisierungskoordinaten, die von einer Adresse einer Anschlusszelle eines Mobilfunk-Endgeräts stammt.

6. Verfahren nach einem der Ansprüche 4 und 5, wobei der Bestimmungsschritt (S1) mindestens ein Präferenzkriterium (i4) berücksichtigt, das vorher von der ersten und/oder zweiten Person in eine erste bzw. eine zweite Parametrierungsdatei eingegeben wurde, die der ersten und der zweiten Person in der virtuellen Umgebung zugeordnet sind, wobei das Präferenzkriterium zu der Gruppe gehört, die enthält:
• eine Schwelle (303) geographischer Nähe zwischen dem Begegnungsort und den statischen oder dynamischen Lokalisierungskoordinaten der ersten und/oder zweiten natürlichen Person;
• eine maximale Dauer einer Reisezeit zwischen einem Lokalisierungsort der ersten und oder zweiten natürlichen Person und dem Begegnungsort, für mindestens eine vorbestimmte Art von Transportmittel.

7. Verfahren nach Anspruch 6, wobei der Bestimmungsschritt (S1) des Begegnungsorts einen Teilschritt (S1.1) der Abfrage einer Datenbank von geographischen Orten enthält, um mindestens einen Begegnungsort zu bestimmen, der für eine Begegnung zwischen der ersten und der zweiten natürlichen Personen geeignet ist, wobei der Abfrage-Teilschritt mindestens eine der folgenden Informationen berücksichtigt:
• die statische Lokalisierungsinformation (i2) der ersten natürlichen Person;
• die dynamische Lokalisierungsinformation (i3) der ersten Person;
• das mindestens eine Präferenzkriterium (i4), das von der ersten Person eingegeben wird;
• die statische Lokalisierungsinformation (i2) der zweiten natürlichen Person;
• die dynamische Lokalisierungsinformation (i3) der zweiten Person;
• das mindestens eine Präferenzkriterium (i4), das von der zweiten Person eingegeben wird.

8. Verfahren nach einem der Ansprüche 1 bis 7, das einen Schritt (S3) des gemeinsamen Akzeptierens durch die erste und die zweite natürliche Person, mittels des ersten und des zweiten Avatars, des im Darstellungsschritt (S2) vorgeschlagenen Begegnungsorts enthält.

9. Verfahren nach Anspruch 8, wobei auf den Akzeptierungsschritt (S3) ein Schritt (S4) des automatischen Aufbaus einer Verbindung zwischen der ersten und der zweiten natürlichen Person folgt, um ihnen zu erlauben, ein Datum und eine Uhrzeit der Begegnung am Begegnungsort zu definieren.

10. System zur Übertragung von Daten an eine erste und mindestens eine zweite natürliche Person (12) in einer Umgebung (20), mit der die erste und die zweite Person mittels eines ersten und eines zweiten Kommunikationsendgeräts verbunden sind, wobei die Umgebung eine virtuelle Umgebung ist, in der die erste und die zweite Person von einem ersten bzw. zweiten Avatar (22) dargestellt werden, wobei die Avatare in der virtuellen Umgebung von den natürlichen Personen, die sie darstellen, verschoben werden können, wobei das System Einrichtungen zur dynamischen Bestimmung mindestens eines Begegnungsorts enthält, der geographisch für eine Begegnung zwischen der ersten und der zweiten natürlichen Person geeignet ist, wobei die Einrichtungen eingesetzt werden, wenn ein Wert eines Abstandsanzeigers (i1) zwischen dem ersten und dem zweiten Avatar in der virtuellen Umgebung niedriger als eine vorbestimmte Schwelle ist.

11. System nach Anspruch 10, das außerdem Einrichtungen zur Darstellung des Begegnungsorts für die erste und zweite Person in der Umgebung (20) enthält.

12. System nach einem der Ansprüche 10 und 11, wobei die Bestimmungseinrichtungen mindestens eine statische Lokalisierungsinformation (i2) der ersten und/oder zweiten Person berücksichtigen.

13. System nach einem der Ansprüche 10 bis 12, wobei die Bestimmungseinrichtungen mindestens eine dynamische Lokalisierungsinformation (i3) der ersten und/oder zweiten Person berücksichtigen.

14. System nach Anspruch 13, wobei die Bestimmungseinrichtungen mindestens ein Präferenzkriterium (i4) berücksichtigen, das vorher von der ersten und/oder zweiten Person in eine erste und zweite Parametrierungsdatei eingegeben wird, die der ersten bzw. zweiten Person in der Umgebung zugeordnet sind, wobei das Präferenzkriterium zu der Gruppe gehört, die enthält:
• eine Schwelle (303) geographischer Nähe zwischen dem Begegnungsort und den statischen oder dynamischen Lokalisierungskoordinaten der ersten und/oder zweiten natürlichen Person;
• eine maximale Dauer einer Reisezeit zwischen einem Lokalisierungsort der ersten und oder zweiten natürlichen Person und dem Begegnungsort, für mindestens eine vorbestimmte Art von Transportmittel.

15. System nach Anspruch 14, wobei die Bestimmungseinrichtungen mit mindestens einer Datenbank von vorbestimmten geographischen Orten zusammenwirken, um mindestens einen Begegnungsort zu bestimmen, der für eine Begegnung zwischen der ersten und der zweiten natürlichen Person geographisch geeignet ist.

16. Computerprogrammprodukt, das von einem Kommunikationsnetz heruntergeladen und/oder auf einem computerlesbaren Informationsträger gespeichert und/oder von einem Mikroprozessor ausgeführt werden kann, das Codeanweisungen zur Ausführung eines Verfahrens zur Bestimmung mindestens eines geographischen Orts enthält, der für eine Begegnung zwischen einer ersten und mindestens einer zweiten natürlichen Person geeignet ist, gemäß einem der Ansprüche 1 bis 9, wenn es auf einem Computer ausgeführt wird.

17. Server (40) zur Verfügungstellung und Verwaltung einer virtuellen Umgebung, die aus der Ferne mittels eines Kommunikationsnetzes ausgehend von einer Immersionsvorrichtung eines Benutzers zugänglich ist, wobei der Benutzer in der virtuellen Umgebung durch einen Avatar dargestellt wird, der Einrichtungen enthält, um ein Computerprogramm nach Anspruch 16 auszuführen.

## Claims

1. Method for the transmission of data to a first and at least a second physical person (12) in an environment (20) to which said first and second persons are connected by means of a first and of a second communication terminal, respectively, said environment (20) being a virtual environment in which said first and second persons are represented, respectively, by a first and a second avatar (22), it being possible for said avatars to be moved, respectively, in the virtual environment by the physical persons they represent, and said method comprises a step (S1) for dynamic determination of at least one meeting location geographically adapted for a meeting between said first and second physical persons which is executed when a value of an indicator (i1) of distance between said first and second avatars in said virtual environment is below a predetermined threshold.

2. Method according to Claim 1, further comprising a step (S2) of representation of said meeting location to said first and second persons in said virtual environment (20).

3. Method according to Claim 1, said step (S1) of determination taking account of at least one static item of information (i2) of location of said first and second persons, respectively.

4. Method according to Claim 1, said step (S1) of determination taking account of at least one dynamic item of information (i3) of location of said first and/or second persons, respectively.

5. Method according to Claim 4, said at least one dynamic item of information (i3) of location being of the type belonging to the group comprising:
▪ a set of geolocation coordinates obtained from a geolocation device;
▪ a set of geolocation coordinates from an address of a home cell of a mobile communication terminal.

6. Method according to either of Claims 4 and 5, said step (S1) of determination taking account of at least one criterion (i4) preferably previously posted by said first and/or second person in a first and a second setting file, respectively, associated with said first and second persons in said virtual environment, said preference criterion belonging to the group comprising:
▪ a threshold (303) of geographical proximity between said meeting location and said static or dynamic coordinates of location of said first or second physical persons;
▪ a maximum duration of journey time between a meeting location of said first or second physical persons and said meeting location for at least one type of predetermined means of transport.

7. Method according to Claim 6, said step (S1) of determination of said meeting location comprising a sub-step (S1.1) of interrogation of a database of geographical locations in order to determine at least one meeting location that is suitable for a meeting between said first and second physical persons, said interrogation sub-step taking account of at least one of the following items of information:
▪ said static item of information (i2) of location of said first physical person;
▪ said dynamic item of information (i3) of location of said first person;
▪ said at least one preference criterion (i4) posted by said first person;
▪ said static item of information (i2) of location of said second physical person;
▪ said dynamic item of information (i3) of location of said second person;
▪ said at least one preference criterion (i4) posted by said second person.

8. Method according to any one of Claims 1 to 7, comprising a joint step (S3) of acceptance by said first and second physical persons, by means of said first and second avatars, of said meeting location proposed in said step (S2) of representation.

9. Method according to Claim 8, said step (S3) of acceptance being followed by a step (S4) of automatic establishment of a communication between said first and second physical persons in order to enable them to define a date and a time of meeting at said meeting location.

10. System for transmission of data to a first and at least a second physical person (12) in an environment (20) to which said first and second persons are connected by means of a first and of a second communication terminal, respectively, the environment being a virtual environment in which said first and second persons are represented, respectively, by a first and a second avatar (22), it being possible for said avatars to be, respectively, moved in the virtual environment by the physical persons they represent, the system comprising means of dynamic determination of at least one meeting location geographically adapted for a meeting between said first and second physical persons, said means being implemented when a value of an indicator (i1) of distance between said first and second avatars in said virtual environment is below a predetermined threshold.

11. System according to Claim 10, further comprising means for representation of said meeting location to said first and second persons in said environment (20).

12. System according to either of Claims 10 and 11, said means of determination taking account of at least one static item of information (i2) of location of said first and/or second persons, respectively.

13. System according to any one of Claims 10 to 12, said means of determination taking account of at least one dynamic item of information (i3) of location of said and/or second person, respectively.

14. System according to Claim 13, said means of determination taking account of at least one preference criterion (i4) previously posted by said first and/or second person in a first and a second setting file, respectively, associated with said first and second persons in said environment, said preference criterion belonging to the group comprising:
▪ a threshold (303) of geographical proximity between said meeting place and said static or dynamic coordinates of location of said first or second physical persons;
▪ a maximum duration of journey time between a location of location of said first or second physical person and said meeting location for at least one predetermined means of transport.

15. System according to Claim 14, said means of determination collaborating with at least one database of predetermined geographical locations for determining at least one meeting location geographically adapted for a meeting between said first and second physical persons.

16. Computer program product that can be downloaded from a communication network and/or stored on an information medium that can be read by computer and/or executed by a microprocessor, comprising code instructions for the execution of a method of determination of at least one geographical location adapted for a meeting between a first and at least a second physical person, in accordance with any one of Claims 1 to 9, when executed on a computer.

17. Server (40) providing and managing a virtual environment remotely accessible by means of a communication network from an immersive device of a user, said user being represented in said virtual environment by an avatar, comprising means for executing a computer program according to Claim 16.
